# FASCICULE DE BREVET EUROPEEN

(11) **EP 2 535 602 B1**
(45) Date de publication et mention de la délivrance du brevet: **14.01.2015**
(21) Numéro de dépôt: 12170775.6
(22) Date de dépôt: 05.06.2012
(51) Int. Cl.: F16B 45/02

(54) **Mousqueton de sécurité**
Sicherheitskarabiner
Locking carabiner

(30) Priorité: 16.06.2011 FR 1155267
(43) Date de publication de la demande: 19.12.2012
(73) Titulaire: Wichard, 63300 Thiers (FR)
(72) Inventeur: Tardif, Sébastien, 44600 Saint Nazaire (FR)
(74) Mandataire: Verriest, Philippe

(56) Documents cités:
- EP-A1- 1 344 951
- DE-A1- 4 237 263

## Description

La présente invention concerne un mousqueton de sécurité utilisé, entre autres, pour la pratique de l'escalade, de la spéléologie et des sports nautiques, tels que la voile, ou encore dans le domaine de la sécurité contre les chutes de personnes intervenant en hauteur.

Le document DE 42 37 263 décrit un mousqueton de sécurité comprenant :
- un corps délimitant une boucle ouverte et comprenant une première et une deuxième extrémité,
- un doigt de fermeture monté pivotant autour d'un axe de pivotement situé au niveau de la première extrémité du corps, entre une position de fermeture dans laquelle le doigt de fermeture coopère avec la deuxième extrémité du corps afin de fermer la boucle et une position d'ouverture dans laquelle le doigt de fermeture est basculé vers l'intérieur du mousqueton,
- des moyens de verrouillage montés mobiles sur le doigt de fermeture entre une position de verrouillage dans laquelle les moyens de verrouillage coopèrent avec la deuxième extrémité du corps du mousqueton de manière à verrouiller le doigt de fermeture dans sa position de fermeture, et une position de déverrouillage dans laquelle le doigt de fermeture est déplaçable vers sa position d'ouverture, et
- des moyens d'actionnement agencés pour déplacer les moyens de verrouillage entre leurs positions de verrouillage et de déverrouillage, les moyens d'actionnement comprenant un organe de manipulation relié aux moyens de verrouillage et monté mobile sur le doigt de fermeture entre une première position dans laquelle les moyens de verrouillage sont en position de verrouillage et une deuxième position dans laquelle les moyens de verrouillage sont en position de déverrouillage, l'organe de manipulation étant agencé de telle sorte qu'un déplacement de ce dernier entre ses première et deuxième positions entraîne un déplacement des moyens de verrouillage entre leurs positions de verrouillage et de déverrouillage.

Un tel mousqueton présente plusieurs inconvénients découlant plus particulièrement de la position de l'organe de manipulation sur le doigt de fermeture.

En effet, lorsqu'un utilisateur cherche à enlever la corde ou la sangle disposée à l'intérieur du mousqueton, celle-ci s'accroche souvent à l'organe de manipulation.

De plus, une telle position de l'organe de manipulation rend difficile l'ouverture du mousqueton, puisqu'il est nécessaire d'exercer successivement une pression sur l'organe de manipulation dans une première direction afin de déplacer ce dernier vers sa deuxième position, et une pression sur le doigt de fermeture dans une deuxième direction transversale à la première direction afin de déplacer le doigt de fermeture vers sa position d'ouverture. Une telle manipulation du mousqueton est malaisée, et l'est d'autant plus lorsqu'elle doit être réalisée avec une seule main ou par un utilisateur de petite taille.

En outre, une telle position de l'organe de manipulation peut entrainer un risque de déverrouillage intempestif du doigt de fermeture, donc un risque d'ouverture de ce dernier, par exemple lors du frottemment de l'organe de manipulation contre un élément extérieur, tel qu'une partie de l'ancrage ou un cordage.

La présente invention vise à remédier à ces inconvénients.

Le problème technique à la base de l'invention consiste donc à fournir un mousqueton qui soit de structure simple et économique, et qui permette une ouverture rapide et aisée du mousqueton.

A cet effet, la présente invention concerne un mousqueton de sécurité comprenant :
- un corps délimitant au moins en partie un premier passant destiné à recevoir un élément d'amarrage, tel qu'une ligne de vie,
- un doigt de fermeture monté pivotant sur le corps autour d'un axe de pivotement, entre une position de fermeture dans laquelle le doigt de fermeture coopère avec le corps afin de fermer le premier passant et une position d'ouverture dans laquelle le doigt de fermeture est basculé vers l'intérieur du mousqueton afin de rendre accessible le premier passant,
- des moyens de verrouillage montés mobiles sur le doigt de fermeture entre une position de verrouillage dans laquelle les moyens de verrouillage coopèrent avec le corps du mousqueton de manière à verrouiller le doigt de fermeture dans sa position de fermeture, et une position de déverrouillage dans laquelle le doigt de fermeture est déplaçable vers sa position d'ouverture, et
- des moyens d'actionnement agencés pour déplacer les moyens de verrouillage entre leurs positions de verrouillage et de déverrouillage, les moyens d'actionnement comprenant un organe de manipulation relié aux moyens de verrouillage et mobile entre une première position dans laquelle les moyens de verrouillage sont en position de verrouillage et une deuxième position dans laquelle les moyens de verrouillage sont en position de déverrouillage, l'organe de manipulation étant agencé de telle sorte qu'un déplacement de ce dernier entre ses première et deuxième positions entraîne un déplacement des moyens de verrouillage entre leurs positions de verrouillage et de déverrouillage,
   **caractérisé en ce que** l'organe de manipulation est monté mobile sur une portion du corps du mousqueton opposée au doigt de fermeture, entre ses première et deuxième positions.

La disposition de l'organe de manipulation sur le corps du mousqueton à l'opposé du doigt de fermeture permet à un utilisateur de réaliser l'ouverture du mousqueton à l'aide d'une seule main, tout simplement en déplaçant l'organe de manipulation vers sa deuxième position à l'aide d'un doigt, tel que le pouce, et en déplaçant le doigt de fermeture vers sa position d'ouverture à l'aide d'un autre doigt, tel que l'index. Il en résulte ainsi une ouverture rapide, aisée et ergonomique du mousqueton.

Selon un mode de réalisation de l'invention, l'organe de manipulation est disposé sur la portion du corps du mousqueton opposée au doigt de fermeture.

Il doit être noté que les moyens de verrouillage sont distincts des moyens d'actionnement.

De préférence, le corps comprend une première branche en forme de crochet délimitant au moins en partie le premier passant, et les moyens de verrouillage sont agencés pour coopérer, en position de verrouillage, avec la première branche en forme de crochet.

Préférentiellement, le corps comprend une portion centrale prolongée à ses extrémités respectivement par la première branche en forme de crochet et une deuxième branche, le doigt de fermeture étant monté pivotant sur la deuxième branche et étant agencé pour coopérer, en position de fermeture, avec la première branche en forme de crochet pour fermer le premier passant.

Selon un mode de réalisation de l'invention, l'organe de manipulation est monté mobile sur la portion centrale du corps et est conformé de telle sorte qu'un déplacement de l'organe de manipulation de sa première position vers sa deuxième position consiste en un éloignement de ce dernier de la deuxième branche du corps.

Avantageusement, les moyens d'actionnement sont montés sur une première partie du doigt de fermeture et les moyens de verrouillage sont montés sur une deuxième partie du doigt de fermeture différente de la première partie.

Selon un mode de réalisation de l'invention, les moyens d'actionnement comportent un organe d'actionnement monté mobile sur le doigt de fermeture entre au moins une première position dans laquelle les moyens de verrouillage sont en position de verrouillage, et une deuxième position dans laquelle les moyens de verrouillage sont en position de déverrouillage, l'organe d'actionnement étant relié aux moyens de verrouillage de telle sorte qu'un déplacement de l'organe d'actionnement entre ses première et deuxième positions entraîne un déplacement des moyens de verrouillage entre leurs positions de verrouillage et de déverrouillage, l'organe d'actionnement étant monté sur l'organe de manipulation de telle sorte qu'un déplacement de l'organe de manipulation entre ses première et deuxième positions entraîne un déplacement de l'organe d'actionnement entre ses première et deuxième positions.

Préférentiellement, l'organe de manipulation comprend une partie de manipulation montée autour de la portion du corps du mousqueton opposée au doigt de fermeture, et une partie de montage située à l'intérieur du mousqueton et sur laquelle est monté l'organe d'actionnement. De préférence, la partie de manipulation est montée autour de la portion centrale du corps.

La partie de manipulation présente de préférence une forme d'étrier, et la partie de montage comporte préférentiellement deux pattes sensiblement parallèles solidaires de la partie de manipulation et formant une chape.

Selon un mode de réalisation de l'invention, les moyens d'actionnement et le corps du mousqueton délimitent au moins en partie un deuxième passant séparé du premier passant et destiné à recevoir un élément d'amarrage, tel qu'une longe.

Avantageusement, les organes d'actionnement et de manipulation sont conformés pour séparer les premier et deuxième passants, et l'organe d'actionnement est monté de manière amovible sur l'organe de manipulation de telle sorte qu'en position montée, les organes d'actionnement et de manipulation séparent les premier et deuxième passants, et de telle sorte qu'en position démontée, les organes d'actionnement et de manipulation autorisent une communication entre les premier et deuxième passants. Ces dispositions permettent le retrait d'une longe reçue dans le deuxième passant à l'extérieur du mousqueton, après démontage des organes de manipulation et d'articulation et déplacement du doigt de fermeture vers sa position d'ouverture.

De façon préférentielle, l'organe d'actionnement est conformé de manière à prendre appui contre une portion du corps du mousqueton opposée au doigt de fermeture, lorsqu'il se trouve dans sa première position.

De façon avantageuse, l'organe d'actionnement est monté articulé sur l'organe de manipulation autour d'un axe d'articulation.

Selon une caractéristique avantageuse de l'invention, l'axe d'articulation s'étend sensiblement parallèlement à l'axe de pivotement du doigt de fermeture.

Préférentiellement, l'axe d'articulation est monté déplaçable axialement par rapport aux organes d'actionnement et de manipulation entre une position de fonctionnement dans laquelle il s'étend à travers les organes d'actionnement et de manipulation de manière à assurer le montage de ces derniers, et une position de démontage dans laquelle il autorise un démontage des organes de manipulation et d'actionnement.

Avantageusement, l'axe d'articulation est monté de manière imperdable sur l'organe de manipulation ou l'organe d'actionnement.

Selon une alternative de réalisation de l'invention, l'axe d'articulation est monté de manière amovible sur l'organe de manipulation ou l'organe d'actionnement.

De préférence, le mousqueton de sécurité comprend des premiers moyens de rappel agencés pour solliciter l'organe d'actionnement vers sa première position, et des deuxièmes moyens de rappel agencés pour solliciter le doigt de fermeture vers sa position de fermeture.

Le s premiers et deuxièmes moyens de rappel sont avantageusement formés au moins en partie par un ressort de torsion monté sur l'organe d'actionnement, le ressort de torsion comprenant une première branche reliée aux moyens de verrouillage et sollicitant le doigt de fermeture vers sa position de fermeture, et une deuxième branche sollicitant l'organe d'actionnement vers sa première position.

Selon une caractéristique avantageuse de l'invention, l'axe d'articulation comporte une gorge périphérique dans laquelle s'étend la deuxième branche du ressort de torsion. Préférentiellement, la deuxième branche du ressort de torsion prend appui dans le fond de la gorge périphérique.

De préférence, l'organe d'actionnement comporte une lumière débouchant au niveau de la deuxième branche du ressort de torsion, ladite lumière étant agencée pour permettre le passage d'un outil destiné à déplacer la deuxième branche du ressort de torsion à l'extérieur de la gorge périphérique.

Selon un mode de réalisation de l'invention, le doigt de fermeture comprend deux portions latérales sensiblement parallèles délimitant un logement dans lequel s'étend au moins partiellement l'organe d'actionnement, chaque portion latérale du doigt de fermeture comportant une lumière sensiblement en arc de cercle centrée sur l'axe de pivotement du doigt de fermeture, l'organe d'actionnement comportant une première et une deuxième portions en saillie opposées l'une par rapport à l'autre et montées respectivement coulissantes dans lesdites lumières.

De façon préférentielle, le mousqueton de sécurité comprend au moins un témoin de verrouillage, avantageusement de couleur vive, prévu pour signaler un état de verrouillage ou de déverrouillage du doigt de fermeture.

Avantageusement, le doigt de fermeture comprend une fenêtre, et le témoin de verrouillage est solidaire des moyens de verrouillage et est mobile entre une première position dans laquelle le témoin de verrouillage est visible à travers la fenêtre et indique un état de verrouillage du doigt de fermeture, et une deuxième position dans laquelle le témoin de verrouillage est décalé par rapport à la fenêtre et indique un état de déverrouillage du doigt de fermeture.

Selon un mode de réalisation de l'invention, les moyens de verrouillage comportent un doigt de verrouillage monté mobile dans un logement ménagé dans le doigt de fermeture et agencé pour coopérer, en position de verrouillage, avec un premier orifice ménagé dans le corps du mousqueton. Le premier orifice ménagé dans le corps du mousqueton débouche de préférence dans la deuxième extrémité de ce dernier.

Préférentiellement, le corps du mousqueton présente un deuxième orifice traversant débouchant dans le premier orifice.

Selon un mode de réalisation de l'invention, le mousqueton de sécurité comprend des moyens de blocage mobiles entre une position de blocage de l'organe de manipulation dans sa première position, et une position de déblocage de l'organe de manipulation autorisant un déplacement de ce dernier vers sa deuxième position.

De façon avantageuse, la portion du corps du mousqueton sur laquelle est monté l'organe de manipulation comprend au moins une butée, et les moyens de blocage comportent un bouton de commande équipé d'au moins un doigt de blocage, le bouton de commande étant monté mobile sur l'organe de manipulation entre une position de blocage dans laquelle le doigt de blocage est agencé pour coopérer avec la butée de manière à empêcher un déplacement de l'organe de manipulation vers sa deuxième position, et une position de déblocage dans laquelle le doigt de blocage est décalé par rapport à la butée de manière à autoriser un déplacement de l'organe de manipulation vers sa deuxième position.

De préférence, le mousqueton de sécurité comporte des moyens de rappel agencés pour solliciter le bouton de commande vers sa position de blocage.

Selon un mode de réalisation de l'invention, la première branche du corps comporte une partie de retenue présentant, vue de face, sensiblement une forme en T, et l'extrémité libre du doigt de pivotement présente un logement sensiblement de forme complémentaire de celle de la partie de retenue et destiné à recevoir cette dernière.

Avantageusement, le doigt de fermeture comporte au moins une portion faisant saillie dans le logement destiné à recevoir la partie de retenue et destinée à coopérer avec une surface de retenue ménagée sur la partie de retenue, ladite au moins une portion étant agencée pour mater la surface de retenue lorsque la charge exercée sur le mousqueton dépasse une valeur prédéterminée.

Selon une alternative de réalisation de l'invention, l'une des parois délimitant le logement destiné à recevoir la partie de retenue est agencée pour coopérer avec une surface de retenue ménagée sur la partie de retenue de manière à mater la surface de retenue lorsque la charge exercée sur le mousqueton dépasse une valeur prédéterminée.

De toute façon, l'invention sera bien comprise à l'aide de la description qui suit en référence au dessin schématique annexé représentant, à titre d'exemple non limitatif, une forme d'exécution de ce mousqueton de sécurité.
Figure 1 est une vue en perspective du mousqueton de sécurité selon l'invention montrant le doigt de fermeture en position de fermeture.
Figure 2 est une vue en perspective du mousqueton de sécurité de la figure 1 montrant le doigt de fermeture en position d'ouverture.
Figure 3 est une vue en perspective et en coupe partielle du mousqueton de sécurité de la figure 1 montrant le doigt de fermeture en position de fermeture.
Figure 4 est une vue en perspective et en coupe partielle du mousqueton de sécurité de la figure 1 montrant les moyens de verrouillage en position de déverrouillage.
Figure 5 est une vue, à l'échelle agrandie, d'un détail de la figure 3.
Figure 6 est une vue en perspective et en coupe selon la ligne Vl-VI de la figure 5.
Figure 7 est une vue en perspective et en coupe montrant l'axe d'articulation en position de démontage.
Figure 8 est une vue en perspective du mousqueton de la figure 1 dans laquelle l'organe de manipulation a été retiré.
Figure 9 est une vue en perspective de l'organe de manipulation du mousqueton de la figure 1.
Figures 10 et 11 sont des vues en perspectives d'une extrémité du corps du mousqueton de la figure 1.
Figure 12 est une vue en perspective de l'extrémité libre du doigt de fermeture du mousqueton de la figure 1.
Figure 13 est une vue de côtés du mousqueton de la figure 1 avec les première et deuxième branches du corps en appui sur un support plan.
Figure 14 est une vue de côtés du mousqueton de la figure 1 avec la première branche du corps en appui sur un support plan et la deuxième branche décalé par rapport au support plan.

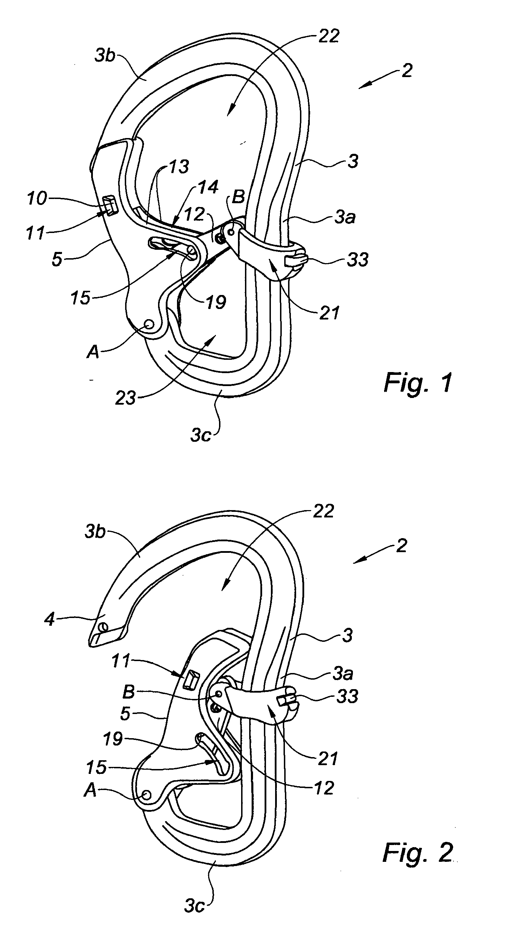

Les figures 1 à 14 représentent un mousqueton de sécurité 2 utilisable, entre autres, pour la pratique de l'escalade, de la spéléologie et des sports nautiques, tels que la voile, ou encore dans le domaine de la sécurité contre les chutes de personnes intervenant en hauteur.

Le mousqueton de sécurité 2 comporte un corps 3 en forme générale de C. Le corps 3 comporte une portion centrale sensiblement rectiligne 3a prolongée à ses extrémités respectivement par une première branche en forme de crochet 3b et une deuxième branche cintrée 3c. La première branche en forme de crochet 3b comporte, à son extrémité libre, une partie de retenue 4.

Le mousqueton de sécurité 2 comporte en outre un doigt de fermeture 5 monté pivotant autour d'un axe de pivotement A situé au niveau de l'extrémité libre de la deuxième branche cintrée 3c, entre une position de fermeture dans laquelle le doigt de fermeture 5 coopère avec la partie de retenue 4 de la première branche en forme de crochet 3b et une position d'ouverture dans laquelle le doigt de fermeture 5 est basculé vers l'intérieur du mousqueton.

Le mousqueton de sécurité 2 comporte également des moyens de verrouillage montés mobiles sur le doigt de fermeture 5 entre une position de verrouillage dans laquelle les moyens de verrouillage coopèrent avec la première branche en forme de crochet 3b, et plus particulièrement avec la partie de retenue 4, de manière à verrouiller le doigt de fermeture 5 dans sa position de fermeture, et une position de déverrouillage dans laquelle le doigt de fermeture 5 est déplaçable vers sa position d'ouverture.

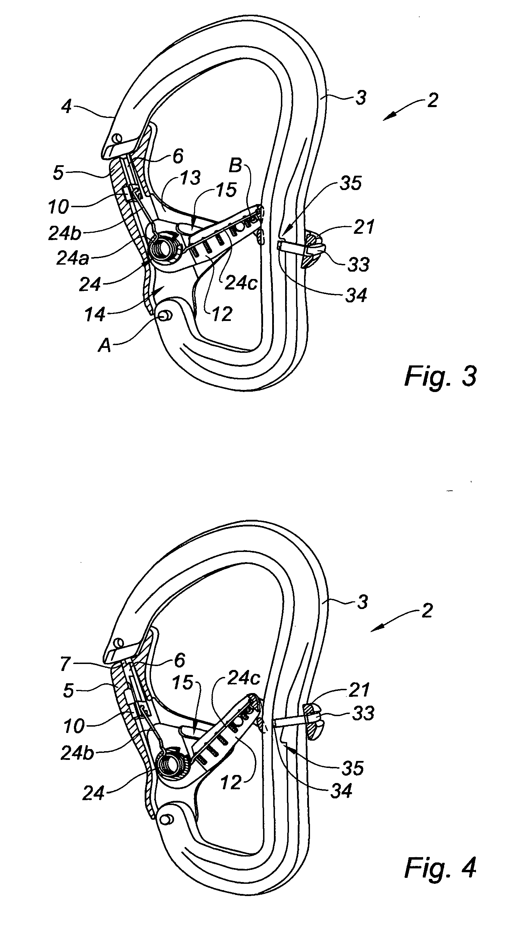

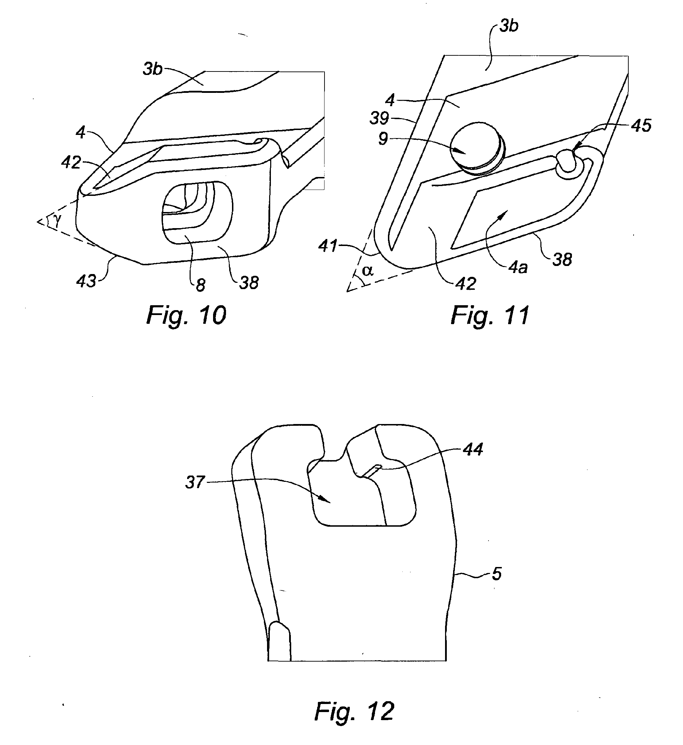

Comme montré plus particulièrement sur les figures 3 et 4, les moyens de verrouillage comportent un doigt de verrouillage 6 monté mobile dans un logement 7 ménagé dans le doigt de fermeture 5 et débouchant dans l'extrémité libre du doigt de fermeture 5. Le doigt de verrouillage 6 est agencé pour coopérer, en position de verrouillage, avec un premier orifice 8 (représenté sur la figure 10) ménagé dans la partie de retenue 4.

La portion en forme de crochet 3b présente avantageusement un deuxième orifice traversant 9 débouchant dans le premier orifice 8 de manière à éviter une accumulation de saletés à l'intérieur du premier orifice 8, et donc tout risque de blocage non souhaité du doigt de verrouillage 6.

Le mousqueton de sécurité 2 comprend de plus un témoin de verrouillage 10, avantageusement de couleur vive, solidaire du doigt de verrouillage 6 et prévu pour signaler un état de verrouillage du doigt de fermeture 5.

De préférence, le doigt de fermeture 5 comprend une fenêtre 11, et le témoin de verrouillage 10 est mobile entre une première position dans laquelle il est visible à travers la fenêtre 11 et indique un état de verrouillage du doigt de fermeture 5, et une deuxième position dans laquelle il est décalé par rapport à la fenêtre 11, et donc non visible, et indique un état de déverrouillage du doigt de fermeture 5.

Le mousqueton de sécurité 2 comprend en outre des moyens d'actionnement agencés pour déplacer les moyens de verrouillage entre leurs positions de verrouillage et de déverrouillage.

Les moyens d'actionnement comportent un organe d'actionnement 12 relié au doigt de verrouillage 6 et monté mobile sur le doigt de fermeture 5 entre au moins une première position (représentée sur les figures 1 et 3) dans laquelle le doigt de verrouillage 6 est en position de verrouillage, et une deuxième position (représentée sur les figures 2 et 4) dans laquelle le doigt de verrouillage 6 est en position de déverrouillage.

L'organe d'actionnement 12 est conformé de manière à prendre appui contre une partie de la portion centrale 3a tournée vers l'intérieur du mousqueton, lorsqu'il se trouve dans sa première position.

Le doigt de fermeture 5 comprend avantageusement deux ailes latérales 13 sensiblement parallèles délimitant un logement 14 dans lequel s'étend au moins partiellement l'organe d'actionnement 12. Chaque aile latérale 13 du doigt de fermeture 5 comporte une lumière 15 sensiblement en arc de cercle centrée sur l'axe de pivotement A du doigt de fermeture 5.

L'organe d'actionnement 12 comporte une première et une deuxième surfaces 17, 18 sensiblement planes opposées l'une par rapport à l'autre, et un premier et un deuxième ergots 19 (seul un ergot est visible sur les figures) ménagés respectivement sur les première et deuxième surfaces planes 17, 18 et montés respectivement coulissants dans les lumières 15 correspondantes. Les premier et deuxième ergots 19 sont coaxiaux et s'étendent sensiblement parallèlement à l'axe de pivotement A du doigt de fermeture 5.

Les moyens d'actionnement comprennent également un organe de manipulation 21 monté mobile sur la portion centrale 3a du corps du mousqueton, entre une première position (représentée sur les figures 1 et 3) et une deuxième position (représentée sur les figures 2 et 4), et sur lequel est monté articulé l'organe d'actionnement 12 autour d'un axe d'articulation B sensiblement parallèlement à l'axe de pivotement A du doigt de fermeture 5.

L'organe de manipulation 21 comprend une première portion 21 a en forme d'étrier montée mobile autour de la portion centrale 3a du corps du mousqueton, et une partie de montage 21 b située à l'intérieur du mousqueton et comportant deux pattes 21 c sensiblement parallèles et solidaires de la partie de manipulation 21 a. La partie de montage 21 b forme une chape portant l'axe d'articulation B.

Les organes de manipulation et d'actionnement 21 , 12 sont agencés de telle sorte qu'un déplacement de l'organe de manipulation 21 entre ses première et deuxième positions entraîne un déplacement de l'organe d'actionnement 12 entre ses première et deuxième positions, et de telle sorte qu'un déplacement de l'organe d'actionnement 12 entre ses première et deuxième positions entraîne un déplacement du doigt de verrouillage 6 entre ses positions de verrouillage et de déverrouillage.

Plus particulièrement, le déplacement de l'organe de manipulation 21 vers sa deuxième position provoque un éloignement de l'axe d'articulation B de la portion centrale 3a, et ainsi un pivotement de l'organe d'actionnement 12 par rapport au doigt de fermeture 5, autour de ses ergots 19.

Le corps 3, les organes d'actionnement et de manipulation 12, 21 et le doigt de fermeture 5 délimitent un premier passant 22, accessible après déplacement du doigt de fermeture 5 vers sa position d'ouverture, destiné à recevoir un cordage ou un point d'ancrage, et un deuxième passant 23, séparé du premier passant 22 par les organes de manipulation et d'actionnement, destiné à recevoir une longe.

Le mousqueton de sécurité comprend également un ressort de torsion 24 monté sur l'organe d'actionnement 12 et agencé d'une part pour solliciter le doigt de fermeture 5 vers sa position de fermeture, et d'autre part pour solliciter l'organe d'actionnement 12 vers sa première position.

Le ressort de torsion 24 est constitué par un fil métallique enroulé sur lui-même pour former une boucle centrale 24a montée dans un logement complémentaire délimité par l'organe d'actionnement 12, la boucle centrale 24a se prolongeant par une première branche 24b agencée pour solliciter le doigt de fermeture 5 vers sa position de fermeture et dont l'extrémité libre est montée sur le doigt de verrouillage 6, et par une deuxième branche 24c agencée pour solliciter l'organe d'actionnement 12 vers sa première position.

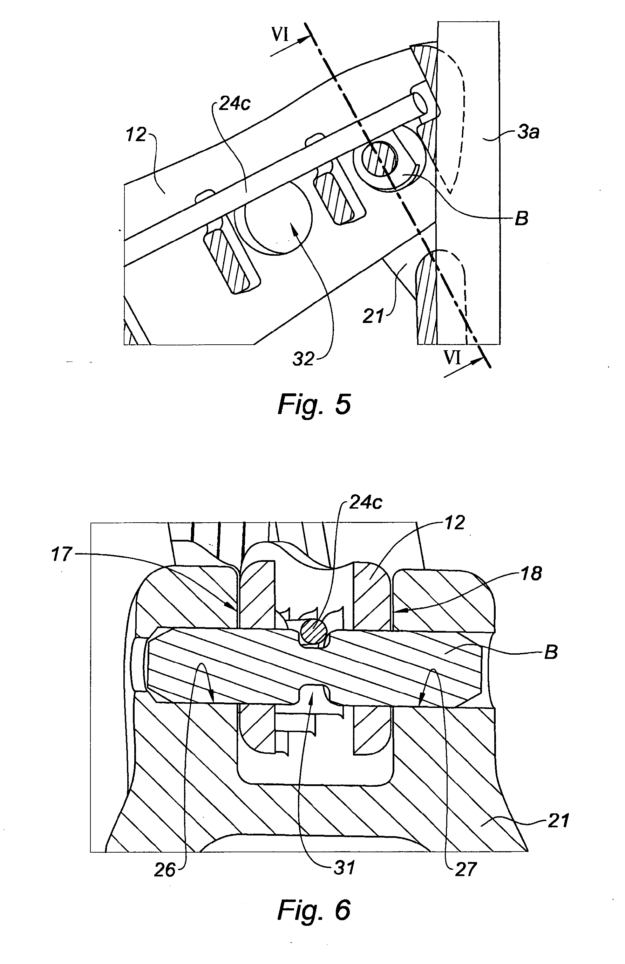

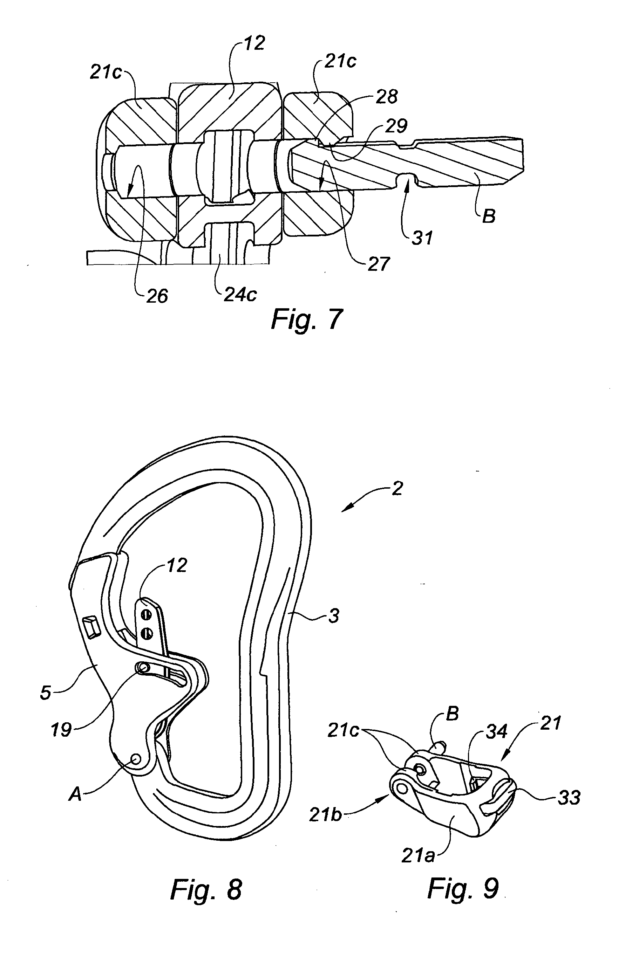

L'axe d'articulation B est monté de manière imperdable sur l'organe d'actionnement 12, et est déplaçable axialement entre une position de fonctionnement (montrée sur la figure 6) dans laquelle il s'étend à travers les organes d'actionnement et de manipulation 12, 21, et une position de démontage (montrée sur la figure 7) dans laquelle il ne s'étend pas à travers l'organe d'actionnement 12 et autorise un démontage des organes de manipulation et d'actionnement 12, 21.

Comme montré sur les figures 6 et 7, chaque patte 21 c de la partie de montage 21 b comporte un oeillet 26, 27 destiné à recevoir l'axe d'articulation B, l'oeillet 26 comportant une portion présentant une section inférieure à la section maximale de l'axe d'articulation B de manière à empêcher son retrait par cet oeillet, et l'oeillet 27 étant conformé pour autoriser un retrait partiel de l'axe d'articulation B à travers cet oeillet.

Le montage imperdable de l'axe d'articulation B est assuré en prévoyant notamment un épaulement 28 sur l'axe d'articulation B à proximité de l'une de ses extrémités, et un ergot 29 faisant saillie dans l'oeillet 27 et agencé pour coopérer avec l'épaulement 28.

Afin d'immobiliser l'axe d'articulation B dans sa position de fonctionnement, ce dernier comporte une gorge périphérique 31 dans le fond de laquelle prend appui la deuxième branche 24c du ressort de torsion 24.

L'organe d'actionnement 12 comporte avantageusement une lumière 32 débouchant au niveau de la deuxième branche 24c du ressort de torsion 24. La lumière 32 est agencée pour permettre le passage d'un outil destiné à déplacer la deuxième branche 24c du ressort de torsion 24 à l'extérieur de la gorge périphérique 31 afin de permettre un déplacement de l'axe d'articulation B entre ses positions de fonctionnement et de démontage.

Le mousqueton de sécurité 2 comprend des moyens de blocage mobiles entre une position de blocage de l'organe de manipulation 21 dans sa première position, et une position de déblocage de l'organe de manipulation 21 autorisant un déplacement de ce dernier vers sa deuxième position.

Les moyens de blocage comportent un bouton de commande 33 en forme générale de U dont au moins l'une des branches, et de préférence chaque branche, est équipé d'un doigt de blocage 34. Le bouton de commande 33 est monté mobile sur l'organe de manipulation 21 entre une position de blocage (montrée sur la figure 3) dans laquelle le ou chaque doigt de blocage 34 est agencé pour coopérer avec une butée 35 ménagée sur la portion centrale 3a du corps de manière à empêcher un déplacement de l'organe de manipulation 21 vers sa deuxième position, et une position de déblocage (montrée sur la figure 4) dans laquelle chaque doigt de blocage 34 est décalé par rapport à la butée correspondante 35 de manière à autoriser un déplacement de l'organe de manipulation 21 vers sa deuxième position.

Selon un mode de réalisation, le bouton de commande comporte une portion élastiquement déformable agencée de manière à favoriser un retour de ce dernier vers sa position de blocage.

Comme montré sur les figures 10 et 11, la partie de retenue 4 comporte une portion d'extrémité 4a effilée et dirigée vers l'extérieur du mousqueton. La portion d'extrémité 4a présente, vue de côté, une forme générale de pointe. En outre, la partie de retenue 4 présente, vue de face, sensiblement une forme en T. Comme montré sur la figure 12, l'extrémité libre du doigt de fermeture 5 présente un logement 37 sensiblement de forme complémentaire de celle de la partie de retenue 4 et destiné à recevoir cette dernière. Ces dispositions permettent notamment de renforcer la résistance à la rupture du mousqueton.

La portion d'extrémité 4a de la partie de retenue 4 est délimitée intérieurement et extérieurement respectivement par une première et une deuxième surfaces sensiblement planes 38, 39 convergeant l'une vers l'autre et s'étendant sensiblement parallèlement à l'axe de pivotement A.

Les première et deuxième surfaces sensiblement planes 38, 39 forment un angle α inférieur ou égal à 90°, et de préférence compris entre 20 et 70° et avantageusement compris entre 30 et 60°.

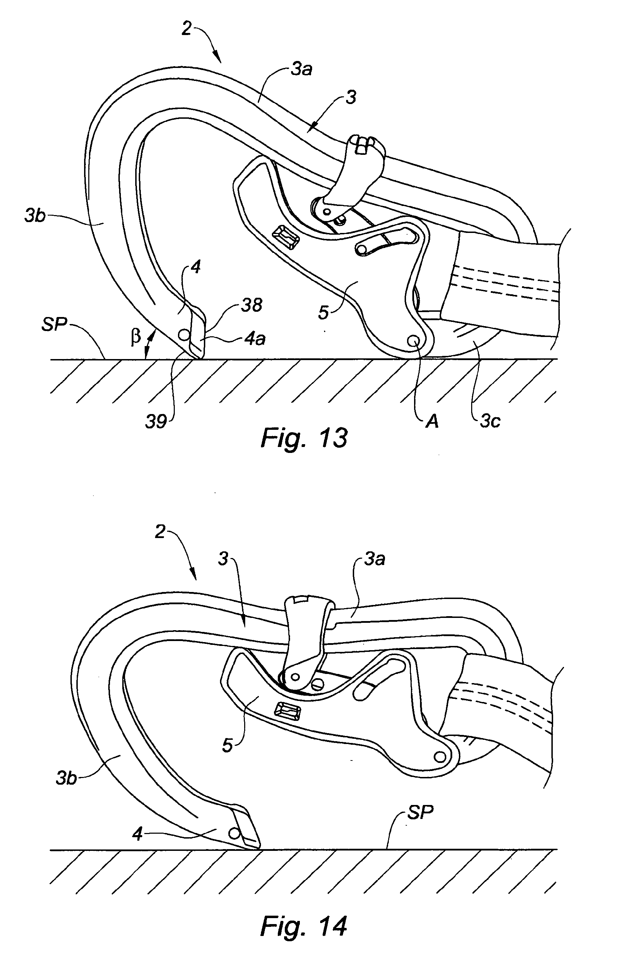

Comme montré sur la figure 13, lorsque le mousqueton de sécurité s'étend sensiblement perpendiculairement à un support plan SP et les première et deuxième branches 3b, 3c du corps sur en appui le support plan, la deuxième surface sensiblement plane 39 et le support plan forment un angle β inférieur ou égal à 90°, et de préférence compris entre 10 et 80° et avantageusement compris entre 30 et 60°.

Les première et deuxième surfaces sensiblement planes 38, 39 sont reliées l'une à l'autre par une portion intermédiaire arrondie 41. La portion intermédiaire arrondie 41 est délimitée extérieurement par une portion de surface cylindrique s'étendant sensiblement parallèlement à l'axe de pivotement A et présentant un rayon de courbure inférieure ou égal à 3 mm, et par exemple d'environ 2 mm.

La partie de retenue 4 est délimitée latéralement par au moins une troisième et une quatrième surfaces sensiblement planes 42, 43 convergeant vers l'extrémité libre de la portion d'extrémité 4a. Les troisième et quatrième surfaces sensiblement planes 42, 43 forment un angle γ inférieur ou égal à 120°, et de préférence compris entre 30 et 90°. Ces dispositions permettent de faciliter l'accrochage d'une ligne de vie tendue le long d'une surface plane en inclinant latéralement le corps du mousqueton par rapport à la surface plane.

Il doit être noté que la partie de retenue 4 est conformée de telle sorte qu'en position d'appui des première et deuxième branches du corps sur un support plan, l'extrémité libre de la portion d'extrémité 4a, à savoir la pointe de cette dernière, forme la zone d'appui de la première branche 3b sur le support plan.

Le doigt de fermeture 5 comporte avantageusement une nervure 44 faisant saillie dans le logement 37, et la partie de retenue 4 comporte une surface de retenue 45 destinée à coopérer avec la nervure 44. La nervure 44 est agencée pour mater la surface de retenue 45 lorsque la charge exercée sur le mousqueton dépasse une valeur prédéterminée.

Le procédé de fixation du mousqueton 2 sur un point d'ancrage va maintenant être décrit.

Le procédé de fixation comporte les étapes consistant à :
- exercer une pression sur le bouton de commande 33 de manière à le déplacer vers sa position de déblocage,
- déplacer l'organe de manipulation 21 vers sa deuxième position afin d'entraîner le déplacement de l'organe d'actionnement 12 vers sa deuxième position et le déplacement du doigt de verrouillage 6 vers sa position de déverrouillage,
- exercer une pression sur le doigt de fermeture 5 de manière à le déplacer vers sa position d'ouverture,
- engager la portion en forme de crochet 3b à l'intérieur du point d'ancrage,
- cesser d'exercer la pression sur le doigt de fermeture 5.

Lorsque l'utilisateur cesse d'exercer une pression sur le doigt de fermeture 5, les première et deuxième branches du ressort de torsion 24 sollicitent respectivement le doigt de fermeture 5 vers sa position de fermeture et l'organe d'actionnement 12 vers sa première position. Il en résulte un verrouillage du doigt de fermeture 5 par rapport au corps et un déplacement de l'organe de manipulation 21 vers sa première position.

Comme il va de soi, l'invention ne se limite pas à la seule forme d'exécution de ce mousqueton, décrite ci-dessus à titre d'exemple, elle en embrasse au contraire toutes les variantes de réalisation.

## Revendications

1. Mousqueton de sécurité (2) comprenant :
- un corps (3) délimitant au moins en partie un premier passant (22) destiné à recevoir un élément d'amarrage, tel qu'une ligne de vie,
- un doigt de fermeture (5) monté pivotant sur le corps autour d'un axe de pivotement (A), entre une position de fermeture dans laquelle le doigt de fermeture coopère avec le corps (3) afin de fermer le premier passant et une position d'ouverture dans laquelle le doigt de fermeture est basculé vers l'intérieur du mousqueton afin de rendre accessible le premier passant,
- des moyens de verrouillage montés mobiles sur le doigt de fermeture (5) entre une position de verrouillage dans laquelle les moyens de verrouillage coopèrent avec le corps (3) du mousqueton de manière à verrouiller le doigt de fermeture dans sa position de fermeture, et une position de déverrouillage dans laquelle le doigt de fermeture est déplaçable vers sa position d'ouverture, et
- des moyens d'actionnement agencés pour déplacer les moyens de verrouillage entre leurs positions de verrouillage et de déverrouillage, les moyens d'actionnement comprenant un organe de manipulation (21) relié aux moyens de verrouillage et mobile entre une première position dans laquelle les moyens de verrouillage sont en position de verrouillage et une deuxième position dans laquelle les moyens de verrouillage sont en position de déverrouillage, l'organe de manipulation (21) étant agencé de telle sorte qu'un déplacement de ce dernier entre ses première et deuxième positions entraîne un déplacement des moyens de verrouillage entre leurs positions de verrouillage et de déverrouillage,
**caractérisé en ce que** l'organe de manipulation (21) est monté mobile sur une portion du corps du mousqueton opposée au doigt de fermeture (5), entre ses première et deuxième positions.

2. Mousqueton de sécurité selon la revendication 1, **caractérisé en ce que** les moyens d'actionnement comportent un organe d'actionnement (12) monté mobile sur le doigt de fermeture (5) entre au moins une première position dans laquelle les moyens de verrouillage sont en position de verrouillage, et une deuxième position dans laquelle les moyens de verrouillage sont en position de déverrouillage, l'organe d'actionnement (12) étant relié aux moyens de verrouillage de telle sorte qu'un déplacement de l'organe d'actionnement entre ses première et deuxième positions entraîne un déplacement des moyens de verrouillage entre leurs positions de verrouillage et de déverrouillage, l'organe d'actionnement (12) étant monté sur l'organe de manipulation (21) de telle sorte qu'un déplacement de l'organe de manipulation entre ses première et deuxième positions entraîne un déplacement de l'organe d'actionnement entre ses première et deuxième positions.

3. Mousqueton de sécurité selon la revendication 2, **caractérisé en ce que** l'organe de manipulation (21) comprend une partie de manipulation (21 a) montée autour de la portion du corps du mousqueton opposée au doigt de fermeture, et une partie de montage (21b) située à l'intérieur du mousqueton et sur laquelle est monté l'organe d'actionnement (12).

4. Mousqueton de sécurité selon la revendication 2 ou 3, **caractérisé en ce que** les moyens d'actionnement et le corps du mousqueton délimitent au moins en partie un deuxième passant (23) séparé du premier passant (22) et destiné à recevoir un élément d'amarrage, tel qu'une longe.

5. Mousqueton de sécurité selon la revendication 4, **caractérisé en ce que** les organes d'actionnement et de manipulation (12, 21) sont conformés pour séparer les premier et deuxième passants (22, 23), et **en ce que** l'organe d'actionnement (12) est monté de manière amovible sur l'organe de manipulation (21) de telle sorte qu'en position montée, les organes d'actionnement et de manipulation séparent les premier et deuxième passants, et de telle sorte qu'en position démontée, les organes d'actionnement et de manipulation autorisent une communication entre les premier et deuxième passants.

6. Mousqueton de sécurité selon l'une des revendications 2 à 5, **caractérisé en ce que** l'organe d'actionnement (12) est monté articulé sur l'organe de manipulation (21) autour d'un axe d'articulation (B).

7. Mousqueton de sécurité selon la revendication 6, **caractérisé en ce que** l'axe d'articulation (B) est monté déplaçable axialement par rapport aux organes d'actionnement et de manipulation (12, 21) entre une position de fonctionnement dans laquelle il s'étend à travers les organes d'actionnement et de manipulation de manière à assurer le montage de ces derniers, et une position de démontage dans laquelle il autorise un démontage des organes de manipulation et d'actionnement.

8. Mousqueton de sécurité selon l'une des revendications 2 à 7, **caractérisé en ce qu'**il comprend des premiers moyens de rappel agencés pour solliciter l'organe d'actionnement vers sa première position.

9. Mousqueton de sécurité selon l'une des revendications 1 à 8, **caractérisé en ce qu'**il comprend des deuxièmes moyens de rappel agencés pour solliciter le doigt de fermeture vers sa position de fermeture.

10. Mousqueton de sécurité selon les revendications 8 et 9, **caractérisé en ce que** les premiers et deuxièmes moyens de rappel sont formés au moins en partie par un ressort de torsion (24) monté sur l'organe d'actionnement (12), le ressort de torsion comprenant une première branche (24b) reliée aux moyens de verrouillage et sollicitant le doigt de fermeture (5) vers sa position de fermeture, et une deuxième branche (24c) sollicitant l'organe d'actionnement (12) vers sa première position.

11. Mousqueton de sécurité selon les revendications 6 et 10, **caractérisé en ce que** l'axe d'articulation (B) comporte une gorge périphérique (31) dans laquelle s'étend la deuxième branche du ressort de torsion.

12. Mousqueton de sécurité selon l'une des revendications 2 à 11, **caractérisé en ce que** le doigt de fermeture (5) comprend deux portions latérales (13) sensiblement parallèles délimitant un logement (14) dans lequel s'étend au moins partiellement l'organe d'actionnement (12), chaque portion latérale (13) du doigt de fermeture comportant une lumière (15) sensiblement en arc de cercle centrée sur l'axe de pivotement (A) du doigt de fermeture, l'organe d'actionnement (12) comportant une première et une deuxième portions en saillie (19) opposées l'une par rapport à l'autre et montées respectivement coulissantes dans lesdites lumières (15).

13. Mousqueton de sécurité selon l'une des revendications 1 à 12, **caractérisé en ce que** le corps (3) comprend une première branche en forme de crochet (3b) délimitant au moins en partie le premier passant (22), et **en ce que** les moyens de verrouillage sont agencés pour coopérer, en position de verrouillage, avec la première branche en forme de crochet (3b).

14. Mousqueton de sécurité selon l'une des revendications 1 à 13, **caractérisé en ce qu'**il comprend des moyens de blocage mobiles entre une position de blocage de l'organe de manipulation (21) dans sa première position, et une position de déblocage de l'organe de manipulation (21) autorisant un déplacement de ce dernier vers sa deuxième position.

15. Mousqueton de sécurité selon la revendication 14, **caractérisé en ce que** la portion du corps du mousqueton sur laquelle est monté l'organe de manipulation (21) comprend au moins une butée (35), et **en ce que** les moyens de blocage comportent un bouton de commande (33) équipé d'au moins un doigt de blocage (34), le bouton de commande (33) étant monté mobile sur l'organe de manipulation (21) entre une position de blocage dans laquelle le doigt de blocage est agencé pour coopérer avec la butée de manière à empêcher un déplacement de l'organe de manipulation vers sa deuxième position, et une position de déblocage dans laquelle le doigt de blocage est décalé par rapport à la butée de manière à autoriser un déplacement de l'organe de manipulation vers sa deuxième position.

## Patentansprüche

1. Sicherheitskarabiner (2), folgendes umfassend:
- einen Korpus (3), eine erste Schlaufe (22) zumindest teilweise eingrenzend, die dazu bestimmt ist, ein Anlegemittel, wie ein Sicherheitsseil, aufzunehmen,
- einen Verschlussriegel (5), der um eine Schwenkachse (A) zwischen einer Schließstellung, in der der Verschlussriegel mit dem Korpus (3) zusammenwirkt, um die erste Schlaufe zu schließen und einer Öffnungsstellung schwenkbar am Korpus montiert ist, in der der Verschlussriegel ins Innere des Karabiners umgelegt ist, um auf die erste Schlaufe zugreifen zu können,
- Verriegelungsvorrichtungen, die zwischen einer ersten Verriegelungsposition, in der die Verriegelungsvorrichtungen mit dem Korpus (3) des Karabiners zusammenwirken, um den Verschlussriegel in seiner Schließposition zu verriegeln, und einer Löseposition beweglich auf dem Verschlussriegel (5) montiert sind, in der der Verschlussriegel in seine Öffnungsposition bewegt werden kann, und
- Betätigungsvorrichtungen, die angeordnet sind, um die Verriegelungsvorrichtungen zwischen ihrer Verriegelungsposition und Löseposition zu bewegen, wobei die Betätigungsvorrichtungen ein Betätigungselement (21) umfassen, das mit den Verriegelungsvorrichtungen verbunden ist und beweglich zwischen einer ersten Position, in der sich die Verriegelungsvorrichtungen in der Verriegelungsposition befinden, und einer zweiten Position, in der sich die Verriegelungsvorrichtungen in der Löseposition befinden, wobei das Betätigungselement (21) derart angeordnet ist, dass eine Bewegung von letzterem zwischen der ersten und der zweiten Position zu einer Bewegung der Verriegelungsvorrichtungen zwischen der Verriegelungsposition und der Löseposition führt,
**dadurch gekennzeichnet, dass** das Betätigungselement (21) auf einem Abschnitt des Karabinerkorpus gegenüber dem Verschlussriegel (5) beweglich zwischen der ersten und der zweiten Position montiert ist.

2. Sicherheitskarabiner nach Anspruch 1, **dadurch gekennzeichnet, dass** die Betätigungsvorrichtungen ein Betätigungsorgan (12) umfassen, das auf dem Verschlussriegel (5) zwischen zumindest einer ersten Position, in der sich die Verriegelungsvorrichtungen in der Verriegelungsposition befinden, und einer zweiten Position beweglich montiert ist, in der sich die Verriegelungsvorrichtungen in der Löseposition befinden, wobei das Betätigungsorgan (12) derart mit den Verriegelungsvorrichtungen verbunden ist, dass eine Bewegung des Betätigungsorgans zwischen seiner ersten und seiner zweiten Position zu einer Bewegung der Verriegelungsvorrichtungen zwischen deren Verriegelungsposition und Löseposition führt, wobei das Betätigungsorgan (12) derart auf dem Betätigungselement (21) montiert ist, dass eine Bewegung des Betätigungselements zwischen seiner ersten und seiner zweiten Position zu einer Bewegung des Betätigungsorgans zwischen seiner ersten und seiner zweiten Position führt.

3. Sicherheitskarabiner nach Anspruch 2, **dadurch gekennzeichnet, dass** das Betätigungselement (21) einen Betätigungsabschnitt (21 a) umfasst, der um den Abschnitt des Karabinerkorpus montiert ist, der gegenüber dem Verschlussriegel liegt, und einen Montageabschnitt (21 b), der im Inneren des Karabiners liegt, und auf dem das Betätigungsorgan (12) montiert ist.

4. Sicherheitskarabiner nach Anspruch 2 oder 3, **dadurch gekennzeichnet, dass** die Betätigungsvorrichtungen und der Karabinerkorpus zumindest teilweise eine zweite Schlaufe eingrenzen (23), die von der ersten Schlaufe (22) getrennt ist, und dazu bestimmt ist, ein Anlegemittel, wie eine Laufleine, aufzunehmen.

5. Sicherheitskarabiner nach Anspruch 4, **dadurch gekennzeichnet, dass** die Betätigungsorgane und die Betätigungselemente (12, 21) so ausgeformt sind, um die erste und die zweite Schlaufe (22, 23) zu trennen, und dadurch, dass das Betätigungsorgan (12) abnehmbar auf dem Betätigungselement (21) montiert ist, sodass die Betätigungsorgane und die Betätigungselemente im montierten Zustand die erste und die zweite Schlaufe trennen, und derart, dass die Betätigungsorgane und die Betätigungselemente im demontierten Zustand eine Verbindung zwischen der ersten und der zweiten Schlaufe zulassen.

6. Sicherheitskarabiner nach einem der Ansprüche 2 bis 5, **dadurch gekennzeichnet, dass** das Betätigungsorgan (12) um eine Artikulationsachse (B) gelenkig auf dem Betätigungselement (21) montiert ist.

7. Sicherheitskarabiner nach Anspruch 6, **dadurch gekennzeichnet, dass** die Artikulationsachse (B) im Verhältnis zu den Betätigungsorganen und den Betätigungselementen (12, 21) axial verschiebbar, zwischen einer Betriebsposition, in der sie sich durch die Betätigungsorgane und die Betätigungselemente erstreckt, um die Montage letzterer zu gewährleisten, und einer Demontagestellung montiert ist, in der sie eine Demontage der Betätigungsorgane und die Betätigungselemente zulässt.

8. Sicherheitskarabiner nach einem der Ansprüche 2 bis 7, **dadurch gekennzeichnet, dass** er erste Rückholvorrichtungen umfasst, die angeordnet sind, um das Betätigungselement in seine erste Position zu bringen.

9. Sicherheitskarabiner nach einem der Ansprüche 1 bis 8, **dadurch gekennzeichnet, dass** er zweite Rückholvorrichtungen umfasst, die angeordnet sind, um den Verschlussriegel in seine Schließposition zu bringen.

10. Sicherheitskarabiner nach den Ansprüchen 8 und 9, **dadurch gekennzeichnet, dass** die ersten und zweiten Rückholvorrichtungen zumindest teilweise aus einer Drehfeder (24) gebildet werden, die auf dem Betätigungsorgan (12) montiert ist, wobei die Drehfeder einen ersten Federschenkel (24b) umfasst, der mit den Verriegelungsvorrichtungen verbunden ist, und den Verschlussriegel (5) in die Schließposition bringt, und einen zweiten Schenkel (24c), der das Betätigungsorgan (12) in seine erste Stellung bringt.

11. Sicherheitskarabiner nach den Ansprüchen 6 und 10, **dadurch gekennzeichnet, dass** die Artikulationsachse (B) eine umlaufende Nut (31) umfasst, in der sich der zweite Schenkel der Drehfeder erstreckt.

12. Sicherheitskarabiner nach einem der Ansprüche 2 bis 11, **dadurch gekennzeichnet, dass** der Verschlussriegel (5) zwei seitliche Abschnitte (13) umfasst, die in etwa parallel verlaufen und eine Aufnahme (14) eingrenzen, in der sich zumindest teilweise das Betätigungsorgan (12) erstreckt, wobei jeder seitliche Abschnitt (13) des Verschlussriegels ein in etwa kreisbogenförmiges Langloch (15) umfasst, dass mittig auf der Schwenkachse (A) des Verschlussriegels angeordnet ist, wobei das Betätigungsorgan (12) einen ersten und einen zweiten überstehenden Abschnitt (19) umfasst, die einander gegenüber liegen, und die jeweils gleitend in den besagten Langlöchern (15) montiert sind.

13. Sicherheitskarabiner nach einem der Ansprüche 1 bis 12, **dadurch gekennzeichnet, dass** der Korpus (3) einen ersten Schenkel in Form eines Hakens (3b) umfasst, der zumindest teilweise die erste Schlaufe (22) eingrenzt, und dadurch, dass die Verriegelungsvorrichtungen angeordnet sind, um in der Verriegelungsposition mit dem ersten Schenkel in Form eines Hakens (3b) zusammenzuwirken.

14. Sicherheitskarabiner nach einem der Ansprüche 1 bis 13, **dadurch gekennzeichnet, dass** er Blockiervorrichtungen umfasst, die zwischen einer Blockierposition des Betätigungselements (21) in seiner ersten Position und einer Löseposition des Betätigungselements (21) bewegt werden kann, in der eine Bewegung von letzterem in seine zweite Position zugelassen wird.

15. Sicherheitskarabiner nach Anspruch 14, **dadurch gekennzeichnet, dass** der Abschnitt des Karabinerkorpus, auf dem das Betätigungselement (21) montiert ist, zumindest einen Anschlag (35) umfasst, und dadurch, dass die Blockiervorrichtungen einen Steuerknopf (33) umfassen, der mit zumindest einem Blockierriegel (34) ausgestattet ist, wobei der Steuerknopf (33) beweglich auf dem Betätigungselement (21) zwischen einer Blockierposition, in der der Blockierriegel angeordnet ist, um mit dem Anschlag zusammenzuwirken, um eine Bewegung des Betätigungselements in die zweite Position zu verhindern, und einer Löseposition montiert ist, in der der Blockierriegel im Verhältnis zum Anschlag versetzt ist, sodass er eine Bewegung des Betätigungselements in seine zweite Position zulässt.

## Claims

1. A safety snap-hook (2) comprising :
- a body (3) delimiting at least in part a first loop (22) intended to receive a mooring element, such as a lifeline,
- a closing finger (5) pivotally mounted on the body around a pivot pin (A), between a closed position in which the closing finger cooperates with the body (3) in order to close the first loop and an open position in which the closing finger is tilted toward the inside of the snap-hook in order to make the first loop accessible,
- locking means movably mounted on the closing finger (5) between a locked position in which the locking means cooperate with the body (3) of the snap-hook so as to lock the closing finger in its closed position, and an unlocked position in which the closing finger is displaceable toward its open position, and
- actuating means arranged for displacing the locking means between their locked and unlocked positions, the actuating means comprising a handling member (21) connected to the locking means and movable between a first position in which the locking means are in the locked position and a second position in which the locking means are in the unlocked position, the handling member (21) being arranged so that a displacement of the latter between its first and second positions results in a displacement of the locking means between their locked and unlocked positions,
**characterized in that** the handling member (21) is movably mounted on a portion of the body of the snap-hook which is opposite to the closing finger (5), between its first and second positions.

2. The safety snap-hook according to claim 1, **characterized in that** the actuating means include an actuating member (12) movably mounted on the closing finger (5) between at least one first position in which the locking means are in the locked position, and a second position in which the locking means are in the unlocked position, the actuating member (12) being connected to the locking means so that a displacement of the actuating member between its first and second positions results in a displacement of the locking means between their locked and unlocked positions, the actuating member (12) being mounted on the handling member (21) so that a displacement of the handling member between its first and second positions results in a displacement of the actuating member between its first and second positions.

3. The safety snap-hook according to claim 2, **characterized in that** the handling member (21) comprises a handling portion (21 a) mounted around the portion of the body of the snap-hook which is opposite to the closing finger, and a mounting portion (21 b) located inside the snap-hook and on which the actuating member (12) is mounted.

4. The safety snap-hook according to claim 2 or 3, **characterized in that** the actuating means and the body of the snap-hook delimit at least in part a second loop (23) separated from the first loop (22) and intended to receive a mooring element such as a tether.

5. The safety snap-hook according to claim 4, **characterized in that** the actuating and handling members (12, 21) are shaped to separate the first and second loops (22, 23), and **in that** the actuating member (12) is removably mounted on the handling member (21) so that in the mounted position, the actuating and handling members separate the first and second loops, and so that in the dismounted position, the actuating and handling members authorize a communication between the first and second loops.

6. The safety snap-hook according to any of claims 2 to 5, **characterized in that** the actuating member (12) is hingedly mounted on the handling member (21) around a hinge pin (B).

7. The safety snap-hook according to claim 6, **characterized in that** the hinge pin (B) is axially movably mounted relative to the actuating and handling members (12, 21) between an operating position in which it extends through the actuating and handling members so as to ensure their mounting, and a dismounted position in which it authorizes a dismounting of the handling and actuating members.

8. The safety snap-hook according to any of claims 2 to 7, **characterized in that** it comprises first return means arranged for biasing the actuating member toward its first position.

9. The safety snap-hook according to any of claims 1 to 8, **characterized in that** it comprises second return means arranged for biasing the closing finger toward its closed position.

10. The safety snap-hook according to claims 8 and 9, **characterized in that** the first and second return means are formed at least in part by a torsion spring (24) mounted on the actuating member (12), the torsion spring comprising a first branch (24b) connected to the locking means and biasing the closing finger (5) toward its closed position, and a second branch (24c) biasing the actuating member (12) toward its first position.

11. The safety snap-hook according to claims 6 and 10, **characterized in that** the hinge pin (B) includes a peripheral groove (31) in which the second branch of the torsion spring extends.

12. The safety snap-hook according to any of claims 2 to 11, **characterized in that** the closing finger (5) comprises two side portions (13) substantially parallel delimiting a housing (14) in which the actuating member (12) extends at least partially, each side portion (13) of the closing finger including an aperture (15) substantially with an arc-of-circle shape centered on the pivot pin (A) of the closing finger, the actuating member (12) including a first and a second protruding portions (19) opposite to each other and slidably mounted respectively in said apertures (15).

13. The safety snap-hook according to any of claims 1 to 12, **characterized in that** the body (3) comprises a first hook-shaped branch (3b) delimiting at least in part the first loop (22), and **in that** the locking means are arranged to cooperate, in the locked position, with the first hook-shaped branch (3b).

14. The safety snap-hook according to any of claims 1 to 13, **characterized in that** it comprises blocking means movable between a position where the handling member (21) is blocked in its first position, and an unblocked position of the handling member (21) authorizing a displacement of the latter toward its second position.

15. The safety snap-hook according to claim 14, **characterized in that** the portion of the body of the snap-hook on which the handling member (21) is mounted comprises at least one abutment (35), and **in that** the blocking means include a control button (33) equipped with at least one blocking finger (34), the control button (33) being movably mounted on the handling member (21) between a blocked position in which the blocking finger is arranged to cooperate with the abutment so as to prevent a displacement of the handling member toward its second position, and an unblocked position in which the blocking finger is shifted relative to the abutment so as to authorize a displacement of the handling member toward its second position.
